# EUROPEAN PATENT APPLICATION

(11) **EP 3 812 416 A1**
(43) Date of publication of application: **28.04.2021**
(21) Application number: 19382920.7
(22) Date of filing: 23.10.2019
(51) Int. Cl.: C08J 3/12, B29B 9/06, B29B 9/16

(54) **PROCESS FOR PRODUCING POLYMERS IN POWDER FORM**

(71) Applicant: Acondicionamiento Tarrasense, 08225 Terrassa (Barcelona) (ES)
(72) Inventor: AUBOUY, Laurent, 08225 Terrassa (BARCELONA) (ES); GALINDO ANGUERA, Magí, 08225 Terrassa (BARCELONA) (ES); ALONSO ALMIRALL, Oscar, 08225 Terrassa (BARCELONA) (ES); BADALLÓ CAÑELLAS, Pere, 08225 Terrassa (BARCELONA) (ES); GONZALEZ GIL, Iban, 08225 Terrassa (BARCELONA) (ES); COSTAS BOSQUE, Daniel, 08225 Terrassa (BARCELONA) (ES); BATLLE SÁNCHEZ, Borja, 08225 Terrassa (BARCELONA) (ES)
(74) Representative: Pons Ariño, Angel

(57) **Abstract**

The present invention relates to a process for producing polymers in powder form by using laser energy. It relates also to polymers in powder form obtainable according to that process, and the use of those polymers in powder form in additive manufacturing.

## Description

### Technical Field

The present invention belongs to the field of polymers in powder form.

### Background art

Polymers in powder form are becoming increased technological interest in view of their application in additive manufacturing, i.e. technology that builds 3D objects by adding layer-upon-layer of material, whether the material is plastic, metal, ceramic, etc.

The use of polymers in powder form shows the advantage that the use of solvents, in their production, is eliminated.

Different technologies have been developed to produce polymers in powder form. The processes currently used by companies in the sector for obtaining polymeric materials in powder form, are mainly based on the following techniques: spray drying, dissolution-precipitation, and grinding. Supercritical fluids have been employed in some of these techniques to reduce the use of solvents.

The spray drying technology consists of in preparing dry powder from a liquid solution or a paste of the polymer in a solvent, through rapid drying by application of a hot gas. The quality of the particle distributions obtained is one of the main reasons that make spray drying one of the most widespread techniques. In this way the spray dryer is capable of generating a jet of the solution to separate the solute in solid form and the solvent in the vapor state. The solid is subsequently collected. Spray dryers are capable of drying products at a significantly higher rate than other drying methods. On the other hand, unlike the dissolution-precipitation method, they are capable of generating powder from the paste in a one-step process. The key factors to consider for the spray drying material specifications are: powder morphology and particle distribution, thermal transition of the final components, solvent selection, drying temperature, and feed rate. On the other hand, the main limitations of the method are: solvent consumption, solubility dependence, and industrial availability. Consequently, the processable materials window is reduced to all those for which there is availability of an industrial solvent, and on the other hand the solvent consumption significantly increases the cost of the process. Examples of producing polymers in powder form by spray drying are disclosed in EP-A-3395476, and WO-A-2005/047344.

The dissolution-precipitation method is based on the preparation of a solution of the material together with a solvent for the subsequent collection of the precipitated material through the filtration of the solvent. In one embodiment. the polymeric resin is introduced into a high-pressure reactor, where oxygen is pumped outside, and the pressure is maintained in the range of 0-1.1 MPa by adding nitrogen. The mixture is stirred for at least 1 h at temperatures between 155° C and 185° C until the polymer begins to precipitate. Once the precipitation is complete, the temperature is reduced while the solvent is filtered and the precipitated polymer is collected. The factors to take into account for the process are similar to those mentioned for the spray drying technique: powder morphology and particle distribution, thermal transition of final components, solvent selection and stirring rate during precipitation. Likewise, it shares limitations with the spray drying method, adding the disadvantage of being a multistep process: solvent consumption, solubility dependence, and multistep process. Examples of producing polymers in powder form by dissolution-precipitation are disclosed in CN-A-108084463, CN-A-107722612, CN-A-107383593, CN-A-105860105, CN-A-107304247, WO-A-2018/148359, WO-A-2018/106525, WO-A-2018/075530, and WO-A-2017/140773.

Mechanical grinding, including cryogenic grinding, is another technology to produce polymers in powder form. Different devices may be used to produce powders by grinding: hammer mill, attrition mill, pinned disc mill, or jet mill, for example. One disadvantage of this method is the wide and uneven particle distribution size obtained, which requires usually the separation of particles according to their sizes by sieving. Examples thereof are disclosed in WO-A-2018/010764, WO-A-2017/116885, WO-A-2019/002620, US-A-2018/200922, Brunner et al., Processing-Structure-Property Relationships in Solid-State Shear Pulverization: Parametric Study of Specific Energy, Pol. Eng. Sci., 2012, 52(7), 1555-1564, and Liang et al., Production of fine polymer powder under cryogenic conditions, Chem. Eng. Technol., 2002, 25(4), 401-405.

Other methods for producing polymers in powder form are less widespread, such as the method disclosed in CN-A-108841016, wherein polymer powders are produced by mixing and pre-heating high molecular fibres and a dispersion medium and then ultrasonically treating a mixture to uniformly disperse the mixture, heating the high molecular fibres to a temperature above a softening point of those fibres, annealing them, forming high molecular dispersion liquid drops, cooling the high molecular dispersion liquid drops to a temperature below the softening point of the high molecular fibres; and curing the high molecular dispersion liquid drops to obtain high molecular powder. Another method consists of spraying a mixture of a melted polymer and a supercritical fluid, as disclosed in US-A-2017/0291986. Use of supercritical fluids for producing polymer powders include processes such as the rapid expansion of supercritical solutions (RESS), the gas antisolvent process (GAS), supercritical antisolvent process (SAS) and its various modifications, and the particles from gas-saturated solution (PGSS), as disclosed in Yeo et al., Formation of polymer particles with supercritical fluids: A review, J. Supercrit. Fluid., 2005, 287-308.

Despite the numerous proposals available in the state of the art, there is still a need to have new method for producing polymers in powder form with a reduced cost, avoiding the use of solvents, and easily applicable to a range of polymeric matrials..

### Object of the invention

The object of the present invention is a process for producing polymers in powder form.

It is another aspect of the invention polymer particles obtainable according to that process.

It is another aspect of the invention the use of such polymer particles in additive manufacturing.

### Detailed description of the invention

The object of the present invention is a process for producing polymers in powder form comprising:
1) extruding a polymeric material forming one or more filaments, and
2) cutting the one or more filaments synchronously with the cadence of the extruder, applying ultra-short laser pulses,
wherein the polymer in powder form comprises particles showing a mean diameter comprised between 5 µm and 100 µm.

The authors of the present invention have developed a process for producing polymers in powder form with a significantly reduced cost, solvent-free, and applicable to a broad range of polymers, because dissolution features of the polymers do not represent an issue in that process.

The term "approximately" or "about" refers to a deviation of plus/minus 10%, preferably plus/minus 5%.

In the present description, as well as in the claims, the singular forms "a", "an" and "the" include the plural reference unless the context clearly indicates otherwise. The ranges defined by the preposition "between" include also the two ends thereof.

### Polymeric material

In the process of the invention is used a polymeric material for producing polymers in powder form.

The polymeric material used in the process of the invention is a thermoplastic polymer. It can be an amorphous, semicrystalline, or crystalline; preferably the polymeric material is a thermoplastic semicrystalline polymer.

Crystalline polymers have a relatively sharp melting point, and have an ordered arrangement of molecule chains. Generally, require higher temperatures to flow well when compared to amorphous polymers, while shrink more than amorphous. They usually produce opaque parts due to their molecular structure.

Amorphous polymers have no true melting point and soften gradually and have a random orientation of molecules, i.e. chains can lie in any direction. They do not flow as easily in a mould as crystalline polymers and they shrink less than crystalline polymers. They generally yield transparent, water-clear parts.

Semicrystalline polymers display crystalline regions within amorphous regions.

Thermoplastic polymers suitable to be used in the process of the invention are selected from, for example, polypropylene (PP), high density polyethylene (HDPE), ultra-high-molecular-weight polyethylene (UHMWPE), polyoxymethylene (POM), polyetherketoneketone (PEKK), polyphenylene sulphide (PPS), polybutylene terephthalate (PBT), polyamide (PA), and polystyrene (PS); preferably those thermoplastic polymers are semicrystalline. Amorphous thermoplastic polymers can also be used, e.g. polyurethane thermoplastic (TPU). Polymers, such as polypropylene in crystalline form, can also be used.

Those polymers are well known to the skilled person in the art.

The polymeric material is generally introduced into the extruder in pellet form, and the extruder produces a filament, generally with a mean diameter comprised between 2 µm and 80 µm,

### Extruder

In the process of the invention there is an extruding step of a polymeric material to obtain one or more filaments.

The technical parameters of the extruding step, such as feed rate, temperature, and extruder speed, are adjusted to the polymeric material by the skilled person in the art.

The term "extruder speed" in this description represents the speed at which the filament is gathered up from the extruder. It is a parameter that may be adjusted to obtain the required size of the polymer powder. It is usually comprised between 1000 m/min and 8000 m/min, preferably between 1800 m/min and 6000 m/min, and yet more preferably between 2800 m/min and 4000 m/min. In a preferred embodiment, the extruder speed is 4000 m/min.

Temperature of the extruder is directly related to the melting point of the polymeric material used to produce polymer powders. According to the Polymer Properties Database, for example, PE shows a melting point of about 141° C, PA between about 220 and about 270° C, POM about 170° C, PS between about 180 and about 280° C, PBT between about 240° C and about 260° C. The skilled person may adjust the temperature of the extruder to the right value for each polymeric material. Usually, the extruder is set at a temperature slightly higher than the melting point of the polymeric material

Extruders suitable to be used in the process of the invention are commercially available through companies such as, for example, Werner & Pfleiderer Brabender, Bausano, etc.

### Laser

In the process of the invention the filament is cut synchronously with the cadence of the extruder, applying ultra-short laser pulses.

The term "ultra-short laser pulses" in the description refers to pulses having a width from picoseconds to femtoseconds.

The interaction of laser energy with the polymer filament produces the melting of the polymer forming a spheroid with minimized surface roughness.

Laser devices suitable for the process of the invention have a wavelength comprised between 300 nm and 1 mm, preferably comprised between 345 nm and 10600nm, and more preferably comprised between 345 nm and 538 nm, and a maximum power comprised between 0.4 W and 5 W.

Laser devices suitable to provide ultra-short laser pulses are commercially available through, for example, the company MACSA ID. Specific laser devices are, for example, D-5000 PS: Nd: YAG 5W picogreen 1.5W, which has a wavelength of 538 nm and a maximum power of 1.5 W, and DPSS-UV: Nd: YV04 5W, which has a wavelength of 345 nm, and a maximum power of 5 W.

The laser device is parameterized, regarding power and repetition frequency of the pulse, for the generation of polymeric material ablation, to obtain spheroids with largest diameters comprised between 5 and 80 µm and minimized surface roughness.

In the process of the invention the power of the laser is usually comprised between 0.4 W and 5 W, preferably between 1 W and 3 W, more preferably between 1 W and 2 W, and yet more preferably is 1.5 W.

In the process of the invention the repetition frequency of the pulse is usually comprised between 20 KHz and 90 MHz, preferably between 30 KHz and 1 MHz, preferably between 35 KHz and 150 KHz, more preferably between 40 KHz and 100 KHz, yet more preferably the frequency is selected from 45, 50, 55, 60, 65, 70, 75, 80, 85, 90, 95, and 100 KHz, preferably the frequency is 100 KHz.

### Further steps of the process

The process of the invention comprises usually further steps. Preferably the process comprises the step of separating the spheroids into subgroups according to their particle size distribution having a mean diameter, such as, for example, small, medium, and large. In a specific case, for example, spheroid fragments may be separated in the following three groups by their smallest diameter: ≤10 µm; > 10 µm and ≤40 µm); and > 40 µm and ≤80 µm.

Particle size distribution may be measured by standard techniques, such as laser diffraction, using for example a Mastersizer 3000 (Malvern Analytical).

If needed, a further step is included in the process of the invention such as mixing subgroups of spheroid particles. Usually the mixing is carried out in different proportions depending on the specifications of fluidity of the polymer powder.

In a preferred embodiment, the extruder speed is comprised between 1000 m/min and 8000 m/min, the power of the laser is between 1 W and 3 W, and the repetition frequency of the laser pulse is between 30 KHz and 1MHz. In a more preferred embodiment, the extruder speed is 1000 m/min, the power of the laser is 1.5 W, and the frequency of repetition is 500 KHz.

### Polymer particles

The process of the invention yields polymers in powder form, i.e. polymer particles. Thus, it forms also part of the invention polymer particles obtainable according to the process of the invention. The polymer in powder form comprises particles showing a mean diameter comprised between 5 µm and 100 µm, measured as D₅₀. D₅₀ means a cumulative 50% point of diameter (or 50% pass particle size); D₅₀ is also called average particle size or median diameter.

Polymer particles according to the invention may be used in additive manufacturing (powder bed fusion technologies).

Therefore, it also forms part of the invention the use of the polymer particles of the invention in additive manufacturing.

Surprisingly, the use of laser energy to form polymer particles from polymer filaments yields polymer particles showing minimized surface roughness and even particle size distribution. Moreover, the claimed process is low-cost, because the energy consumption is significantly lower than other methods due to the use of a laser with very low power, and because it is solvent free. This feature opens the possibility to use a broad range of polymers, because there are no solubility problems that arise using other prior art technologies.

The invention comprises the following embodiments:
1.- A process for producing polymers in powder form, characterized in that it comprises:
   1) extruding a polymeric material forming one or more filaments, and
   2) cutting the one or more filaments synchronously with the cadence of the extruder, applying ultra-short laser pulses
   wherein the polymer particles show a mean diameter comprised between 5 µm and 100 µm, that is to say that the polymer in powder form comprises particles showing a mean diameter comprised between 5 µm and 100 µm.
2.- The process according to embodiment 1, characterized in that the polymeric material is a thermoplastic polymer.
3.- The process according to embodiment 2, characterized in that the thermoplastic polymer is semicrystalline.
4.- The process according to embodiment 2 or 3, characterized in that the thermoplastic polymer is selected from polypropylene (PP), high density polyethylene (HDPE), ultra-high-molecular-weight polyethylene (UHMWPE), polyoxymethylene (POM), polyetherketoneketone (PEKK), polyphenylene sulphide (PPS), polybutylene terephthalate (PBT), polyamide (PA), and polystyrene (PS).
5.- The process according to any one of embodiments 1 to 4, characterized in that the filament has a mean diameter comprised between 2 µm and 80 µm.
6.- The process according to any one of embodiments 1 to 5, characterized in that the extruder speed is comprised between 1000 m/min and 8000 mm/s.
7.- The process according to embodiment 6, characterized in that the extruder speed is comprised between 1800 m/min and 6000 m/min.
8.- The process according to embodiment 7, characterized in that the extruder speed is comprised between 2800 m/min and 4000 m/min.
9.- The process according to any one of embodiments 1 to 8, characterized in that the ultra -short laser pulses have a width from picoseconds to femtoseconds.
10.- The process according to any one of embodiments 1 to 9, characterized in that the laser has a wavelength comprised between 300 nm and 1 mm.
11.- The process according to embodiment 10, characterized in that that the laser has a wavelength comprised between 345 nm and 10600 nm.
12.- The process according to embodiment 11, characterized in that that the laser has a wavelength comprised between 345 nm and 538 nm.
13.- The process according to any one of embodiments 1 to 12, characterized in that the laser has a maximum power comprised between 0.4 W and 5 W.
14.- The process according to embodiment 13, characterized in that the laser has a maximum power comprised between 1 W and 3 W.
15.- The process according to embodiment 14, characterized in that the laser has a maximum power comprised between 1 W and 2 W.
16.- The process according to any one of embodiments 1 to 15, characterized in that the repetition frequency of the laser pulse is comprised between 20 KHz and 90 MHz.
17.- The process according to embodiment 16, characterized in that the repetition frequency of the laser pulse is comprised between 30 KHz and 1 MHz.
18.- The process according to embodiment 17, characterized in that the repetition frequency of the laser pulse is comprised between 35 KHz and 150 KHz.
19.- The process according to embodiment 18, characterized in that the repetition frequency of the laser pulse is comprised between 40 KHz and 100 KHz.
20.- The process according to any one of embodiments 1 to 19, characterized in that it further comprises the step of separating the spheroid particles into subgroups according to their particle size distribution.
21.- The process according to embodiment 20, characterized in that it further includes the step of mixing subgroups of spheroid particles in different proportions.
22.- The process according to embodiment 1, characterized in that extruder speed is comprised between 1000 m/min and 8000 m/min, the power of the laser is comprised between 1 W and 3 W, and the repetition frequency of the laser pulse is comprised between 30 KHz and 1 MHz.
23.- The process according to embodiment 22, characterized in that the extruder speed is 1000 m/min, the power of the laser is 1.5 W, and the frequency of repetition is 500 KHz.
24.- Polymer particles obtainable according to the process of any one of embodiments 1 to 23.
25.- The use of polymer particles according to embodiment 24 in additive manufacturing.

In the following examples, particular embodiments of the composition of the invention are shown.

### Examples

### Examples 1 - 14: Process for preparing polymer powders

Pellets of polybutylene terephthalate (PBT) were introduced into the extruder. The working temperature was set up below the melting point of PBT, which is comprised between about 240° C and about 260° C. The filament produced in the extruder was cut by means of ultra-short pulses of laser D-5000 PS (MACSA ID), having a power of 1.5 W, with different potencies, frequencies and speed of the filament, as shown in Table I:

**TABLE I**

| Example | Power (%) | Frequency (KHz) | Laser scanning speed (mm/s) |
|---|---|---|---|
| 1 | 100 | 100 | 10 |
| 2 | 100 | 100 | 15 |
| 3 | 100 | 100 | 25 |
| 4 | 100 | 100 | 50 |
| 5 | 100 | 100 | 100 |
| 6 | 100 | 100 | 200 |
| 7 | 100 | 50 | 10 |
| 8 | 100 | 200 | 10 |
| 9 | 80 | 50 | 10 |
| 10 | 80 | 75 | 10 |
| 11 | 80 | 100 | 10 |
| 12 | 80 | 50 | 4 |
| 13 | 80 | 50 | 6 |
| 14 | 80 | 50 | 8 |

A power of 100% means 1.5 W, whereas a power of 80% means 1.2 W.

It was observed that in all cases spheroids were obtained showing a minimized surface roughness. Best results were obtained using 100% power, i.e. 1.5 W, and a frequency of 100 KHz.

## Claims

1. A process for producing polymers in powder form, **characterized in that** it comprises:
1) extruding a polymeric material forming one or more filaments, and
2) cutting the one or more filaments synchronously with the cadence of the extruder, applying ultra-short laser pulses,
wherein the polymer in powder form comprises particles showing a mean diameter comprised between 5 µm and 100 µm.

2. The process according to claim 1, **characterized in that** the polymeric material is a thermoplastic polymer.

3. The process according to claim 2, **characterized in that** the thermoplastic polymer is semicrystalline.

4. The process according to claim 2 or 3, **characterized in that** the thermoplastic polymer is selected from polypropylene (PP), high density polyethylene (HDPE), ultra-high-molecular-weight polyethylene (UHMWPE), polyoxymethylene (POM), polyetherketoneketone (PEKK), polyphenylene sulphide (PPS), polybutylene terephthalate (PBT), polyamide (PA), and polystyrene (PS).

5. The process according to any one of claims 1 to 4, **characterized in that** the filament has a mean diameter comprised between 2 µm and 80 µm.

6. The process according to any one of claims 1 to 5, **characterized in that** the extruder speed is comprised between 1000 m/min and 8000 mm/s.

7. The process according to any one of claims 1 to 6, **characterized in that** the ultra - short laser pulses have a width from picoseconds to femtoseconds.

8. The process according to any one of claims 1 to 7, **characterized in that** the laser has a wavelength comprised between 300 nm and 1 mm.

9. The process according to any one of claims 1 to 8, **characterized in that** the laser has a maximum power comprised between 0.4 W and 5 W.

10. The process according to any one of claims 1 to 9, **characterized in that** the repetition frequency of the laser pulse is comprised between 20 KHz and 90 MHz.

11. The process according to any one of claims 1 to 10, **characterized in that** it further comprises the step of separating the spheroid particles into subgroups according to their particle size distribution.

12. The process according to claim 11, **characterized in that** it further includes the step of mixing subgroups of spheroid particles in different proportions.

13. The process according to claim 1, **characterized in that** extruder speed is comprised between 1000 m/min and 8000 m/min, the power of the laser is comprised between 1 W and 3 W, and the repetition frequency of the laser pulse is comprised between 30 KHz and 1 MHz.

14. Polymer particles obtainable according to the process of any one of claims 1 to 13.

15. The use of polymer particles according to claim 14 in additive manufacturing.
